# DEMANDE DE BREVET EUROPEEN

(11) **EP 2 160 011 A1**
(43) Date de publication de la demande: **03.03.2010**
(21) Numéro de dépôt: 09305736.2
(22) Date de dépôt: 06.08.2009
(51) Int. Cl.: H04N 3/15

(54) **Dispositif pour la lecture de charges électroniques et détecteur comprenant de tels dispositifs**

(30) Priorité: 02.09.2008 FR 0855884
(71) Demandeur: Société Française de Détecteurs Infrarouges - SOFRADIR, 92290 Châtenay Malabry (FR)
(72) Inventeur: Zecri, Michel, 38690, BEVENAIS (FR)
(74) Mandataire: Vuillermoz, Bruno

(57) **Abrégé**

L'invention concerne un dispositif (10) pour la lecture de charges électroniques, comportant une entrée pour la réception des charges électroniques, au moins un condensateur (20, 36) pour le stockage des charges électroniques et au moins un circuit à base de transistors MOS (100-106), dont la tension maximale de fonctionnement détermine la tension maximale aux bornes du au moins un condensateur (20, 36).

Selon l'invention, le ou chaque circuit à base de transistors MOS (100-106) est constitué de transistors montés en cascode (110-128).

## Description

### DOMAINE DE L'INVENTION

La présente invention a trait au domaine de la lecture de charges électroniques créées par exemple dans des photodétecteurs élémentaires d'un détecteur, notamment des photodiodes.

### ETAT DE LA TECHNIQUE

Il est connu d'utiliser des photodétecteurs élémentaires, notamment des photodiodes, pour détecter un rayonnement électromagnétique. Le rayonnement électromagnétique incident sur une photodiode crée en effet des charges électroniques dans celle-ci. Ces charges sont usuellement collectées et accumulées dans une capacité de stockage pour pouvoir être lues par la suite.

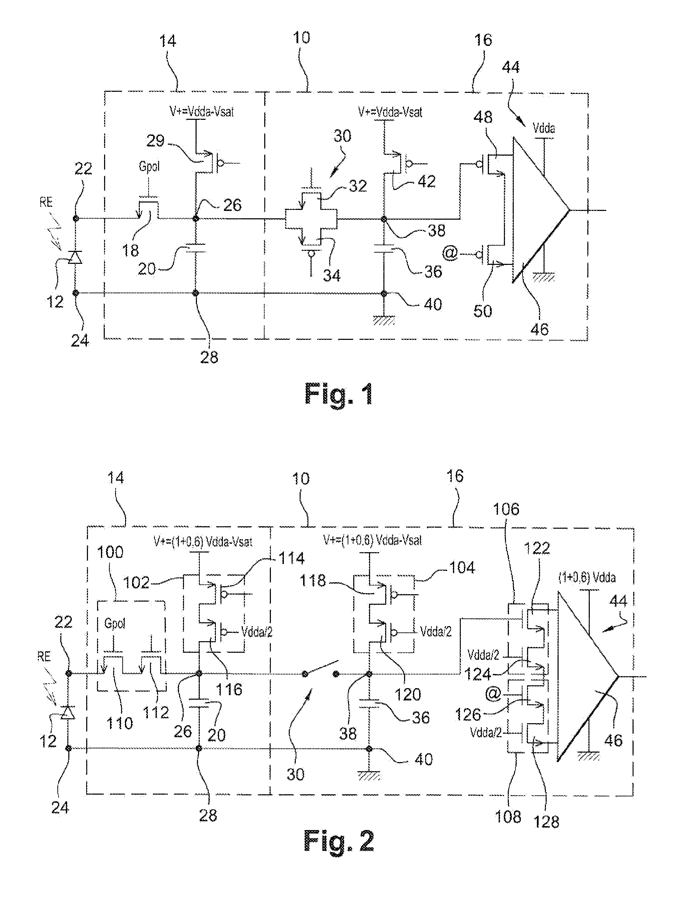

La figure 1 illustre un circuit de lecture **10** des charges électriques créées dans une photodiode **12** d'un détecteur matriciel sous l'effet d'un rayonnement infrarouge « RE » incident sur celle-ci. Le circuit de lecture **10** comporte classiquement un étage d'entrée **14** pour le stockage des charges créées dans la photodiode **12**, et un étage de lecture **16** des charges stockées.

L'étage d'entrée **12** comprend un transistor MOS à canal n d'injection **18** et un condensateur de stockage **20**. La source du transistor d'injection **18** est connectée à une borne **22** de la photodiode **12**, la seconde borne **24** de la photodiode **12** étant par ailleurs connectée à un potentiel constant, comme la masse par exemple. Comme cela est connu en soi, le transistor d'injection **18** a pour fonction de polariser la photodiode **12** et de transférer les charges créées dans celle-ci dans le condensateur de stockage **20**, qui est connecté par une borne **26** au drain du transistor **18** et par l'autre borne **28** à la masse.

L'étage d'entrée **12** comporte également un transistor MOS à canal p d'initialisation **29,** dont le drain est connecté à la borne **26** du condensateur de stockage **20,** et dont la source est connecté à un potentiel constant « V+ » égal à Vdda - Vsat, où « Vdda » est une tension constante prédéterminée d'alimentation du circuit de lecture **10** et « Vsat » est la tension de saturation du transistor **29.** Comme cela est connu, le transistor d'initialisation **29** a pour fonction de décharger le condensateur de stockage **20** avant une accumulation de charges dans celui-ci.

L'étage de lecture **16** comporte quant à lui un interrupteur **30** connecté à la borne **26** du condensateur de stockage **20**, par exemple formé d'un transistor MOS à canal n **32** et d'un transistor MOS à canal p **34,** un condensateur de lecture **36** connecté par une borne **38** à l'interrupteur **30** et par l'autre borne **40** à la masse, un transistor MOS à canal p d'initialisation **42,** dont la source est connecté au potentiel constant « V+ », et dont le drain est connecté à la borne **38** du condensateur de lecture **36**, et un préamplificateur de charge **44.**

Le préamplificateur **44** comprend par exemple un amplificateur opérationnel **46**, un premier transistor MOS à canal n **48**, dont la grille est connectée à la borne **38 d**u condensateur de lecture **36**, et dont le drain est connecté à une première borne d'entrée de l'amplificateur **46**, et un second transistor MOS à canal n **50** dont le drain est connecté à la source dudit premier transistor **48** et dont la source est connectée à la seconde borne d'entrée de l'amplificateur **46,** et dont la grille reçoit un signal d'adressage « @ » correspondant à la colonne du détecteur matriciel à laquelle la photodiode **12** appartient.

En fonctionnement, la photodiode **12** est polarisée par le transistor d'injection **18** et les charges créées dans ladite photodiode sont stockées dans le condensateur **20**, qui a été préalablement déchargé au moyen du transistor d'initialisation **29,** l'interrupteur **30** étant par ailleurs ouvert.

Une fois la durée d'exposition prédéterminée écoulée, l'interrupteur **30** est fermé. Les charges stockées dans le condensateur **20** sont alors transférées au condensateur de lecture **36,** préalablement initialisé au moyen du transistor **42,** puis amplifiées par le préamplificateur **44** pour être délivrées par exemple sur un bus.

La charge électrique totale Q stockable dans chacun des condensateurs de stockage et de lecture **20, 36** est déterminée selon la relation Q = CV, où C est la capacité du condensateur et V la tension aux bornes de celui-ci, ici sensiblement égale à « Vdda-Vsat ».

Pour augmenter la charge totale stockage Q, afin par exemple d'augmenter la dynamique du détecteur ou améliorer le rapport signal sur bruit de celui-ci, il est donc nécessaire d'augmenter la capacité C des condensateurs **20, 36** et/ou la tension **V** aux bornes de ceux-ci.

Or, comme cela est connu en soi, un circuit de lecture de charges électroniques est associé à chaque photodiode d'un détecteur matriciel, de sorte que ledit circuit est usuellement formé sur une surface réduite, notamment pour des raisons de compacité. La capacité C d'un condensateur dépendant de la surface allouée à celui-ci, l'augmentation de la capacité va donc à l'encontre du critère de compacité.

Par ailleurs, l'augmentation de la tension aux bornes des condensateurs implique de soumettre les transistors **18, 29, 42, 48** et **50** à des tensions plus élevées. Or, les transistors sont usuellement conçus pour fonctionner sous une tension maximale prédéfinie, afin de garantir la fiabilité de ces composants. Augmenter la tension aux bornes des condensateurs pour augmenter la charge totale stockable impose donc de soumettre les transistors MOS **18, 29, 42, 48, 50** à des contraintes de tension réduisant leur durée de vie, voire susceptible de les détruire. De fait, la tension maximale de fonctionnement des transistors **18, 29, 42, 48, 50** détermine la tension maximale applicable aux bornes des condensateurs **20, 36.**

### EXPOSE DE L'INVENTION

Le but de la présente invention est de résoudre le problème susmentionné en proposant un dispositif pour la lecture de charges électriques de conception simple et compact, permettant d'augmenter sensiblement la charge totale stockable dans les condensateurs sans soumettre les transistors à de fortes contraintes en termes de tension.

A cet effet, l'invention a pour objet un dispositif pour la lecture de charges électroniques, comportant une entrée pour la réception des charges électroniques, au moins un condensateur pour le stockage des charges électroniques et au moins un circuit à base de transistors MOS dont la tension maximale de fonctionnement détermine la tension maximale aux bornes du au moins un condensateur.

Selon l'invention, le ou chaque circuit à base de transistors MOS est constitué de transistors cascodés.

Comme cela est connu en soi, par transistors « cascodés », on entend des transistors connectés en série, le drain d'un transistor étant connecté à la source d'un autre transistor.

En d'autres termes, les transistors MOS du dispositif de lecture de charges électriques, dont la tension de fonctionnement limite la tension applicable aux bornes des condensateurs, sont cascodés avec au moins un autre transistor MOS.

Ainsi, chaque transistor voit à ses bornes une tension moindre. Par exemple, pour un montage de deux transistors montés en cascode, chacun des transistors voit la moitié de la tension totale appliquée au montage. La tension maximale de fonctionnement d'un tel montage étant supérieure à la tension maximale d'un transistor seul, il est possible d'augmenter la tension aux bornes des condensateurs sans soumettre les transistors à des contraintes de tension dommageables.

L'agencement en cascode des transistors est donc utilisé pour abaisser la tension aux bornes de chaque transistor.

Selon un mode de réalisation particulier de l'invention, le circuit à base de transistors MOS est un circuit d'injection destiné à la polarisation d'un photodétecteur connecté à l'entrée et au transfert des charges électroniques reçues sur l'entrée vers le au moins un condensateur, ledit circuit d'injection comportant deux transistors MOS montés en cascode.

Selon un mode de réalisation particulier de l'invention, le circuit à base de transistors MOS est un circuit d'initialisation du au moins un condensateur, ledit circuit d'initialisation comportant deux transistors MOS montés en cascode.

Selon un mode de réalisation particulier de l'invention, le circuit à base de transistors MOS est un préamplificateur de charges comportant un étage d'entrée formé de transistors MOS montés en cascode.

L'invention a également pour objet un détecteur comportant une pluralité de photodétecteurs élémentaires aptes à créer des charges électroniques sous l'effet d'un rayonnement incident, le détecteur comportant, associé à chacun des photodétecteurs élémentaires, un dispositif conforme à celui précédemment décrit pour la lecture des charges créées par le photodétecteur.

En d'autres termes, la présente invention trouve une application avantageuse dans les détecteurs comportant usuellement des circuits de lecture de charges électroniques créées dans leurs photodétecteurs élémentaires. L'augmentation de la tension aux bornes des condensateurs permet notamment d'améliorer la dynamique du détecteur, le rapport signal sur bruit de celui-ci, tout en préservant une grande durée de vie des transistors.

### BREVE DESCRIPTION DES FIGURES

L'invention sera mieux comprise à la lecture de la description qui va suivre, donnée uniquement à titre d'exemple, et réalisée en relation avec les dessins annexés dans lesquels des références identiques désignent des éléments identiques ou analogues, et dans lesquels :
- la figure 1 est une vue schématique d'un circuit de lecture de l'état antérieur de la technique associé à une photodiode, ce circuit ayant été décrit dans le préambule ; et
- la figure 2 est une vue schématique d'un circuit de lecture selon l'invention.

### DESCRIPTION DETAILLEE DE L'INVENTION

La figure 2 illustre le principe de l'invention appliqué au circuit de lecture de l'état de la technique décrit en relation avec la figure 1.

Selon l'invention, chaque transistor MOS **18, 29, 42, 48 et 50** de la figure 1, dont la tension de fonctionnement limite la tension applicable aux bornes des condensateurs **20** et **36,** est remplacé respectivement par un montage **100-108** correspondant constitué de deux transistors MOS cascodés **110-128** de même nature, chacun des montages **100-108** remplissant la même fonction que le transistor qu'il remplace.

Grâce à l'agencement en cascode, chacun des transistors **110, 112** du montage **100** formant le circuit d'injection, voit ainsi la moitié de la tension appliquée entre les bornes **22** et **26.** De même, chacun des transistors **114, 116** du montage 102 formant circuit d'initialisation du condensateur de stockage **20,** voit la moitié de la tension entre la borne **26** et le potentiel constant « V+ ».

De manière analogue, les transistors **118, 120, 122, 124, 126, 128** voient la moitié de la tension appliquée aux bornes de leur montage **104, 106, 108** respectif.

Il est ainsi possible d'augmenter la tension d'alimentation « Vdda » du circuit de lecture **10,** et par conséquent la tension appliquée aux bornes des condensateurs **20** et **36** sans que la tension résultante aux bornes des transistors **110-128** ne dépasse la tension maximale de fonctionnement de ceux-ci. Par exemple, une augmentation de **100** pourcents de la tension d'alimentation « Vdda » est possible.

Ce faisant, en raison de cette augmentation de la tension aux bornes des condensateurs, il devient possible d'augmenter la capacité de stockage des charges dans chacune de celles-ci, en application de la relation Q = CV.

Bien évidemment, les circuits de lecture décrits en relation avec les figures 1 et 2 sont donnés à titre d'illustration. On comprendra bien évidemment que la présente invention s'applique à tout type de dispositif de lecture de charges électriques comprenant des condensateurs et des transistors MOS, dont les tensions de fonctionnement sont limitées, et cela quel que soit le mode de fonctionnement du circuit de lecture, et notamment les modes de fonctionnement « IWR » (intégration et lecture simultanées), et « ITR » (intégration puis lecture successive).

De même, l'invention peut s'appliquer uniquement à l'étage d'entrée **14** du circuit de lecture **10.**

De même, il est possible d'utiliser plus de deux transistors cascodés pour chaque montage en fonction des besoins spécifiques de chaque application.

## Revendications

1. Dispositif (10) pour la lecture de charges électroniques, comportant une entrée pour la réception des charges électroniques, au moins un condensateur (20, 36) pour le stockage des charges électroniques et au moins un circuit à base de transistors MOS (100-106), dont la tension maximale de fonctionnement détermine la tension maximale aux bornes du au moins un condensateur (20, 36), ***caractérisé* en ce que** le ou chaque circuit à base de transistors MOS (100-106) est constitué de transistors montés en cascode (110-128).

2. Dispositif selon la revendication 1, ***caractérisé* en ce que** le circuit à base de transistors MOS est un circuit d'injection (100) destiné à la polarisation d'un photodétecteur (12) connecté à l'entrée et au transfert des charges électroniques reçues sur l'entrée vers le au moins un condensateur (20), ledit circuit d'injection (100) comportant deux transistors MOS montés en cascode (110, 112).

3. Dispositif selon la revendication 1, ***caractérisé* en ce** le circuit à base de transistors MOS est un circuit d'initialisation (102) du au moins un condensateur (20), ledit circuit d'initialisation (102) comportant deux transistors MOS montés en cascode (114, 116).

4. Dispositif selon la revendication 1, ***caractérisé* en ce** le circuit à base de transistors MOS est un préamplificateur de charges (44) comportant un étage d'entrée formé de transistors MOS montés en cascode (122-128).

5. Détecteur comportant une pluralité de photodétecteurs élémentaires aptes à créer des charges électroniques sous l'effet d'un rayonnement incident, le détecteur comportant, associé à chacun des photodétecteurs, un dispositif conforme à l'une quelconque des revendications précédentes pour la lecture des charges créées par le photodétecteur.
